Europäisches Patentamt

European Patent Office

Office européen des brevets

(11) Publication number: **0 238 214 B1**

# EUROPEAN PATENT SPECIFICATION

(45) Date of publication of patent specification: **16.01.91**

(51) Int. Cl.⁵: **F 16 H 19/04 // B62D3/12**

(21) Application number: **87301482.3**

(22) Date of filing: **20.02.87**

(54) A rack and pinion gear assembly.

(30) Priority: **19.03.86 GB 8606793**

(43) Date of publication of application:
**23.09.87 Bulletin 87/39**

(45) Publication of the grant of the patent:
**16.01.91 Bulletin 91/03**

(84) Designated Contracting States:
**DE FR IT**

(56) References cited:
**GB-A-1 181 738**
**GB-A-2 037 931**
**GB-A-2 096 729**

**PATENT ABSTRACTS OF JAPAN, vol. 7, no. 98**
**(M-210)1243r, 26th April 1983; & JP-A-58 20 561**
**(NISSAN JIDOSHA K.K.) 07-02-1983**

(73) Proprietor: **TRW CAM GEARS LIMITED**
**Old Church Road**
**Clevedon Avon BS21 6NJ (GB)**

(72) Inventor: **Frederick, John Adams**
**Pelba 27 Princes Road**
**Clevedon Avon (GB)**

(74) Representative: **Walters, Frederick James et al**
**Urquhart-Dykes & Lord 91 Wimpole Street**
**London W1M 8AH (GB)**

Courier Press, Leamington Spa, England.

## Description

The present invention relates to a rack and pinion gear assembly and was primarily developed for such an assembly as is widely employed in vehicle stearing systems. More particularly the invention concerns an improved means for maintaining engagement between the teeth of the rack and those of the pinion.

It is well known in rack and pinion gear assemblies for the rack bar to be longitudinally displaceable over a bearing surface which latter urges the rack bar for its teeth to engage with the pinion. Commonly the bearing surface is provided by a yoke or similar member which is located oppositely to the pinion to engage the rack bar on the side thereof remote from the rack and is resiliently biased to urge the rack bar into engagement with the pinion. Examples of such forms of biasing as provided by yokes, rollers, wedges and similar components are to be found in G.B. Patents 1,181,738; 1,125,756; 1,168,191; 2,093,561; 2,096,729; 1,525,760 and U.S. Patent 4,215,591. More particularly in the gear assembly of G.B.—A—1,181,738 the rack bar is longitudinally displaceable through a housing and relative to a yoke by which it is borne to be supported for engagment with the pinion. The yoke is slidably mounted in a channel of the housing and on the side of the yoke remote from the rack bar is a bearing surface which subtends an acute angle with the plane of the rack on the rack bar. In sliding abutment with and between the bearing surface and the channel is a wedge component that is resiliently biased to be displaceable in a plane parallel to that of the rack. The wedge component reacts between the channel and bearing surface under its resilient biasing to bias the yoke and therethrough the rack bar for the rack bar to be urged into engagement with the pinion.

During use of a rack and pinion gear, forces are generated between the rack and pinion teeth which tend to displace those teeth out of engagement and the resilient biasing on the rack bar should be sufficient to ensure that disengagement of the rack and pinion teeth is not permitted. However, for reasons of efficiency, the resilient biasing should not be too great, for example the torque necessary to rotate the pinion to actuate the gear may become unreasonably high with very large resilient biasing forces on the rack bar to urge into engagement with the pinion (due to the frictional forces which would be developed in the system). It is therefore usual to adjust the resilient biasing (which is usually a spring member) by adjusting the position of a stop in the gear assembly against which stop the resilient biasing reacts. This adjustment is conveniently made on assembly of the rack and pinion gear and following which the gear is sealed. However, it is recognised that the characteristics which have to be provided in the gear to permit the manual adjustment of the resilient biasing for the rack, and also the time and labour involved in making the adjustment, add to the overall manufacturing costs of the gear. There is therefore a requirement for a rack and pinion gear assembly which includes means for biasing the rack and pinion into engagement and which alleviates the disadvantages of the prior proposals.

Statement of Invention and Advantages

According to the present invention there is provided a rack and pinion gear assembly having a rack bar with a longitudinally extending axis, a rack and first and second bearing surfaces which converge towards a notional line that extends parallel to the longitudinal axis and is located opposite to the rack; a pinion engaging with the rack; a channel located in a housing and through which the rack bar is longitudinally displaceable, the channel having first and second converging side walls between which the rack bar is axially slidable so that the converging side walls respectively oppose and converge in a similar sense to the two bearing surfaces of the rack bar, the first bearing surface being in sliding abutment with the first side wall, and wherein a wedge component is located between the second bearing surface and the second side wall, said wedge component being resiliently biased relative to the housing characterized in that each of the first and second bearing surfaces is plain and the first bearing surface lies in a plane which subtends an acute angle to the plane of the rack and in that the wedge component is located on the side of the rack bar opposite to that of the first bearing surface and is biased in wedging action between the second bearing surface and the second side wall, said wedge component being urged by the biasing in a direction away from the plane of the rack and so that the rack bar is biased by the components of force exerted thereon through its convergent plain bearing surfaces in a sense for its rack to engage with the pinion.

Further according to the present invention there is provided a vehicle steering system which includes a rack and pinion gear assembly as specified in the immediately preceding paragraph.

Preferably the rack bar is substantially triangular in lateral cross section to have three substantially longitudinal faces, the rack teeth being formed on one of those faces and the two bearing surfaces being located in the other two faces of the rack bar. Alternatively, either of both of the bearing surfaces on the rack bar can be provided by one or more adaptors which are mounted on a rack member; the adaptors may or may not be longitudinally displaceable with the rack member but would be laterally displaceable with that member in the lateral sense in which the rack member is moved for its teeth to be urged into engagement with the teeth of the pinion.

By the present invention it is envisaged that as the spring biased wedge component is displaced in its wedging action between the rack bar and the side wall of the channel, a biasing force is applied to the rack bar to urge its teeth into engagement with those of the pinion, this biasing force being developed through the second bearing face of the rack bar from the pressure applied thereto directly from the wedge component and through the first bearing face of the rack bar by the reaction of the pressure on the face from its sliding engagement with the channel side wall in response to the pressure transmitted through the rack bar from the wedge component. The invention therefore has the advantage that the rack bar is biased into engagement with the pinion and that this biasing is achieved automatically as a result of the constant resilient biasing to which the wedge component is subjected. There is also the advantage that the geometry of the assembly may be such that, for example by selecting appropriate convergent angles between the bearing surfaces of the rack bar, the side walls of the channel housing and of the convergent faces of the wedge, the forces of which are generated in a sense to separate the rack and pinion teeth may react to a very small extent on the wedge component in a sense to urge that component against its resilient biasing. Thus the resilient biasing of the wedge component, even within reasonable limits, can be made so that the wedging action is substantially irreversible. With such an irreversible wedging action it will be apparant that the assembly will, in use, adopt its own equilibrium and positioning of the wedge component to provide the forces necessary to maintain appropriate engagement between the rack and pinion teeth. It will be appreciated however that the geometry of the assembly can be such that a degree of reversibility is permitted for the wedge component whereby that component may be capable of limited displacement against its resilient biasing in response to the generation of large forces tending to displace the rack laterally out of engagement with the pinion. In assemblies having this latter facility it is preferred that a stop is provided in the housing to limit the degree of reversibility permissible for the wedge component.

The components of the gear assembly may be of metal, plastics or glass fibre (or appropriate combinations of these materials) although usually the rack bar at least will be of metal. Where the materials employed may be considered inappropriate to provide sliding bearing surfaces, such as between the rack bar and the side wall of the housing channel, pads of a more suitable bearing material may be provided in those surfaces.

Drawings

Several embodiments of a rack and pinion gear assembly suitable for a vehicle steering system and constructed in accordance with the present invention will now be described, by way of example only, with reference to the accompanying illustrative drawings in which:

Figure 1 is a sectional view of a first embodiment of the gear having a rack bar of triangular cross section;

Figure 2 is a sectional view of a second embodiment of the gear in which the wedge component is intended to be capable of restricted reversibility;

Figure 3 is a partially sectional view of a third embodiment of the gear having a rack member of circular cross section, and

Figures 4, 5 and 6 are perspective views of different forms of wedge components suitable for the gears in Figures 1 to 3.

Detailed Description of Drawings

The rack and pinion steering gear assemblies illustrated have a housing 1 in a pinion chamber 2 of which is rotatably mounted a pinion 6. For completeness there is shown in the drawing a ball bearing 8 by which the input shaft 9 of the pinion is rotatably mounted in the housing and a roller bearing 7 by which a stub shaft from the pinion 6 is rotatably mounted in an end wall 3 of the housing.

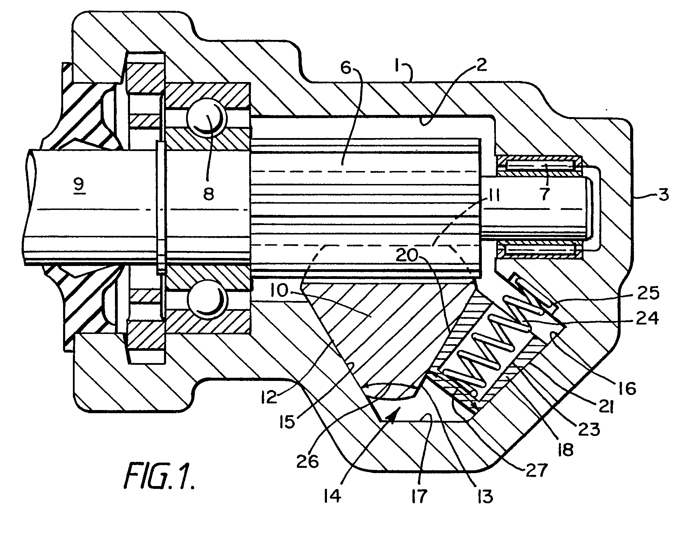

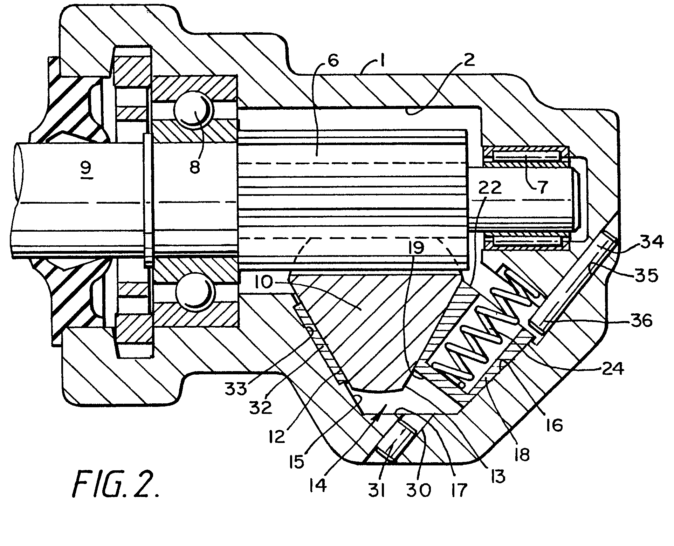

Extending longitudinally through the chamber 2 of the housing in Figures 1 and 2 is a rack bar 10 having a lateral cross sectional shape substantially in the form of an isosceles triangle to provide longitudinally extending side faces 11, 12 and 13. Rack teeth are formed in the face 11 to engage with the teeth of the pinion 6 in conventional manner so that rotation of the pinion effects in longitudinal displacement of the rack bar 10 while the faces 12 and 13 are intended to provide plane bearing surfaces for the rack bar.

The rack bar 10 extends through a channel 14 of the housing which channel is located, generally, on the side of the rack bar remote from its position of engagement with the pinion. The channel 14 has substantially plane and opposed side walls 15 and 16 which converge towards the base 17 of the channel and in a similar sense to the convergent bearing surfaces 12, 13 of the rack bar. The rack bar 10 is mounted in the housing so that its bearing surface 12 is in sliding and face-to-face abutment with the side wall 15 and with clearance being provided between the rack bar and the channel base 17 and between the rack bar bearing surface 13 and the channel side wall 16 which opposes that bearing surface. It will be seen that the rack bar bearing surface 13 and the opposing side wall 16 converge towards each other as they approach the channel base 17. Located between the surfaces 13 and 16 is a wedge 18 (shown separately in Figure 6) and having wedge faces 20 and 21 which converge at an angle substantially corresponding to the angle between the faces 13 and 16 so that there is substantially face-to-face and sliding abutment between the wedge face 20 and bearing surface 13 and between the wedge face 21 and the side wall 16.

Located in a recess 23 in the top face 22 of the wedge 18 is a helical compression spring 24 which reacts between the wedge and a shoulder 25 on the end wall 3 of the housing in the chamber 2 and in a sense to bias the wedge 18 towards the base 17 of the channel 14. The wedge 18 consequently tends to exert components of forces on the rack bar 10 in a direction to urge the rack bar for its teeth to engage those of the pinion. More particularly, there is a component of force on the rack bar 10 (to move its teeth towards the pinion) which results from the direct abutment of the wedge 18 on the bearing surface 13 and a component of force caused by the reaction from the abutment of the bearing surface 12 on the side wall 15 as a result of the pressure applied through the rack bar from the wedge.

It will be appreciated that when the gear shown in Figure 1 has been assembled, the wedge 18 will be urged by the spring 24 into a position of equilibrium between the rack bar and the housing. Consequently the biasing effect on, and the support which is provided for, the rack bar by the wedge 18 will develop automatically and may adjust automatically to compensate for any wear which may occur in the assembly during use. Furthermore, when the gear assembly is incorporated in a steering gear and is thus likely to be subjected to considerable vibration during use, the vibrational forces may tend to urge the rack and pinion teeth out of engagement — however it will be appreicated that the wedge 18 can adjust automatically in a sense to alleviate this tendency. The wedge action exhibited by the wedge 18 in Figure 1 is intended to be irreversible whereby if a large torque is applied to rotate the pinion 6, the separating forces which are generated between the inter-engaging rack and pinion teeth are unlikely to be sufficient to displace the wedge component against its biasing spring 24 (that is in the direction away from the channel base 17) and thereby overcome the support on the rack bar. This irreversibility may be achieved by appropriate selection of the angles indicated at 26 and 27 which are between the bearing surfaces 12 and 13 of the rack bar and the wedge faces 20 and 21 of the wedge component respectively. As can be seen in Figure 1 the angle 26 is greater than the angle 27. Consequently, the separating forces which act towards the base 17 of the channel are countered partly by the side wall 15 and partly by the wedge 18. However, because the angle 27 is less than the angle 26, there will be a small component of force on the wedge acting in the direction against the biasing of its spring 24 and caused by the aforementioned separating forces. Consequently, the spring 24 can readily be selected to ensure that the wedge component 18 is irreversible for all separating forces between the rack and pinion teeth which are likely to be generated in practical use of the assembly.

The embodiment of the gear assembly shown in Figure 2 is similar to that of Figure 1 but includes modifications to permit limited reversibility of the wedge 18 and also to facilitate assembly of the gear. With this latter point in mind, during assembly of the gear it will be usual for the wedge 18 and its spring biasing to be located in the chamber 2 before the rack bar 10 is located in the channel 14 and it will be appreciated that in the arrangement shown in Figure 1 difficulty may be experienced in maintaining the wedge 18 out of engagement with the rack bar 10 until the rack bar has been appropriately positioned in the channel 14. To alleviate this problem, in Figure 2 a hole 30 is provided through the wall of the housing 2 to open into the channel 14 in alignment with the direction of displacement of the wedges 18. During assembly of the Figure 2 gear, a rod (not shown) is inserted through the hole 30 to abut the bottom face 19 of the wedge and displace that component against the spring 24 and thereby hold the wedge clear of the rack bar until such time as the rack bar is positioned correctly in the channel 14. The rod is then removed and the hole 30 provided with a plug 31. The hole 30 is conveniently threaded to mate with the plug 31 and the thread on the hole 30 may also serve to retain the rod in position during assembly of the rack bar in the channel 14 as previously mentioned.

The housing 2 and/or rack bar 10 may be made of material which are unsuitable and/or incompatible for use as bearing surfaces. In such conditions bearing pads (such as that shown at 32 in a recess 33 in the side wall 15 of Figure 2) can be incorporated to provide the appropriate bearing surface characteristics. Also in Figure 2 the gear assembly is intended to exhibit a limited degree of reversibility for its wedge 18, whereby that component may be capable of automatic adjustment in the direction of or against the biasing of its spring 24 during normal usage of the gear. As previously discussed with reference to Figure 1 the reversibility can be determined by appropriate selection of the angles 26 and 27 and of the strength of the biasing spring 24. Bearing in mind the capability for the wedge component 18 in Figure 2 to be displaced against its spring and away from the base of the channel 14 in response to extreme separating forces which may be generated between the rack and the pinion teeth, this reversibility is limited by a rod 34 providing a stop 36 which overlies and is normally spaced from the top face 22 of the wedge 18. The rod 34 is conveniently screw threaded or otherwise secured in a hole 35 of the housing, preferably so it can be adjusted to vary the spacing between the stop 36 and the wedge component as required. As will be appreciated, the extent to which the wedge component 18 is reversible to move in a direction against the biasing of its spring 24 is limited by the abutment of the wedge component with the stop 36.

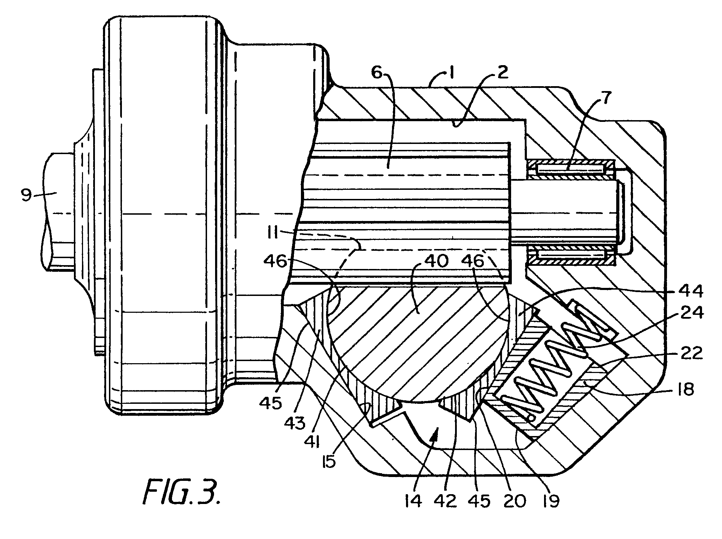

The embodiment shown in Figure 3 is primarily intended to illustrate the application of the present invention to a rack bar in which the two convergent plane bearing surfaces are not an integral part of the rack bar. In the example of Figure 3 the rack teeth 11 are formed on a rack member 40, the lateral section of which is generally circular so that the rack member has part cylindrical bearing surface regions 41 and 42. To provide the convergent plane bearing surfaces for the rack bar in accordance with the present invention, adaptors 43 and 44 are located between the bearing surface 41 and the channel side wall 15 and between the bearing surface 42 and the wedge face 20 respectively. The adaptors are identical and each has a flat bearing surface 45 (which respectively abuts the side wall 15 and wedge face 20) and a part cylindrical concave bearing surface 46 which is complementary to the cylindrical profile of the rack member 40. The surface 46 of adaptor 43 co-operates in complementary manner with the bearing surface region 41 and the surface 46 of adaptor 44 co-operates in complementary manner with the bearing surface region 42. The adaptors 43 and 44 may be arranged to be displaceable longitudinally in unison with the rack member 40 or may be restrained from longitudinal displacement so that the rack member 40 is longitudinally slidable through the opposed bearing surfaces 46. It will be appreciated however that in response to the biasing action of the wedge 18, the adaptors 43 and 44 will be displaced laterally in unison with the rack member 40 so that, at least in this latter respect, the rack member 40 with its adaptors 43 and 44 may be considered as an assembly equivalent to the rack bar 10 of Figure 1.

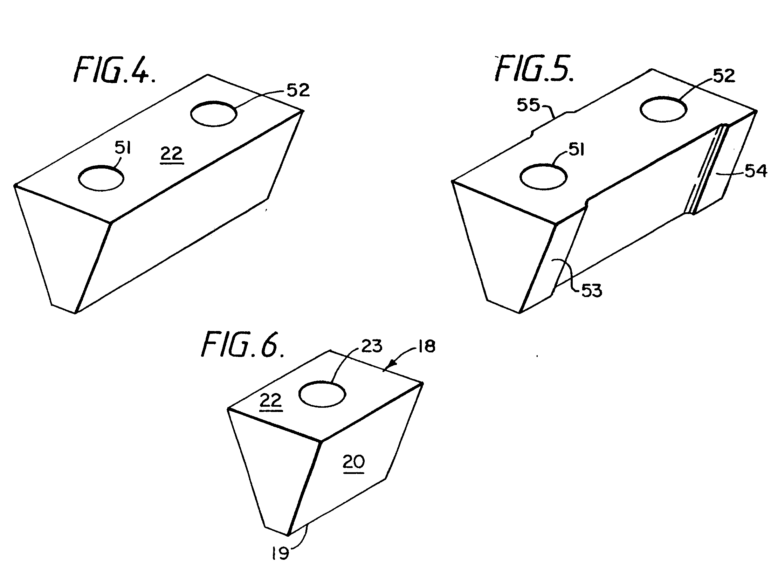

The wedge shown in Figure 4 is primarily intended for a heavy duty rack and pinion steering gear assembly and includes two recesses 51 and 52 which accommodate, one each, two biasing springs each similar to that shown at 24 in Figure 1. Figure 5 also illustrates a heavy duty wedge similar to that in Figure 4 but in which the wedge faces are provided on ribs 53, 54 and 55, two of these ribs forming one wedge face and the third rib forming the other. The ribs may serve to allow the wedge component to adapt under heavy loads between the rack bar and the side wall of the channel. The adapatability of the wedge component which results by the provision of the ribs as aforementioned may be caused by the wedge component manoeuvring or settling on the ribs during use of the gear and/or by resilient deformation or flexing of the ribs under the compressive forces within the gear (where the material of the wedge component is intended to permit such deformation). It will be appreciated that the ribs 53 to 55 can be replaced by bosses or other protrusions with similar effect.

## Claims

1. A rack and pinion gear assembly having a rack bar (10) with a longitudinally extending axis, a rack (11) and first and second bearing surfaces (12, 13) which converge towards a notional line that extends parallel to the longitudinal axis and is located opposite to the rack (11); a pinion (6) engaging with the rack (11); a channel (14) located in a housing (1) and through which the rack bar is longitudinally displaceable, the channel having first and second converging side walls (15, 16) between which the rack bar is axially slidable so that the converging side walls (15, 16) respectively oppose and converge in a similar sense to the two bearing surfaces (12, 13) of the rack bar, the first bearing surface (12) being in sliding abutment with the first side wall (15), and wherein a wedge component (1) is located between the second bearing surface (13) and the second side wall (16), said wedge component (18) being resiliently biased relative to the housing characterized in that each of the first and second bearing surfaces (12, 13) is plain and the first bearing surface (12) lies in a plane which subtends an acute angle to the plane of the rack (11) and in that the wedge component (18) is located on the side of the rack bar (10, 40) opposite to that of the first bearing surface (12) and is biased (24) in wedging action between the second bearing surface (13) and the second side wall (16), said wedge component (18) being urged by the biasing in a direction away from the plane of the rack (11) and so that the rack bar (10) is biased by the components of force exerted thereon through its convergent plain bearing surfaces (12, 13) in a sense for its rack (11) to engage with the pinion (6).

2. An assembly as claimed in claim 1 in which the rack bar (10) is substantially triangular in cross section to have three longitudinally extending faces, the rack (11) being formed on one of those faces and the two bearing surfaces (12, 13) being located in the other faces.

3. An assembly as claimed in either claim 1 or claim 2 wherein at least one of the bearing surfaces (45) for the rack bar is provided by an adaptor (43, 44) on rack member (40) having the rack (11).

4. An assembly as claimed in any of the preceding claims wherein the wedge component (18) is resiliently biased by a compression spring (24) seated within a recess (23) of the wedge component and reacting on a shoulder (25) provided in the housing (1).

5. An assembly as claimed in any one of the preceding claims in which a hole (30) is or was provided in the housing wall to communicate with the channel (14), said hole (30) being substantially in alignment with the wedge component (18) so that, during assembly of the gear, a rod could be passed through the hole (30) to displace the wedge component against its biasing (24) and thereby facilitate installation of the rack bar (10) in the housing (1).

6. An assembly as claimed in claim 5 in which the hole (30) is screw threaded and receives a plug (31).

7. An assembly as claimed in any one of the preceding claims in which the geometry of the bearing surfaces (12, 13), side walls (15, 16) convergent faces (20, 21) of the wedge component (18) and/or the resilient biasing (24) permits the wedge component (18) to be reversible (that is to exhibit displacement against its resilient biasing) in response to excessive forces tending to displace the rack (11) out of engagement with the pinion (6).

8. An assembly as claimed in claim 7 in which a stop (36) is provided in the housing (1) which limits the extent of reversible displacement permissible for the wedge component (18).

9. An assembly as claimed in claim 8 wherein the stop (36) comprises a rod (34) secured in the housing (1) with an end of the rod overlying the wedge component (18) for abutment therewith during movement of the wedge component against its resilient biasing (24).

10. An assembly as claimed in either claim 8 or claim 9 in which the step (36) is adjustable.

11. An assembly as claimed in any one of the preceding claims in which a bearing pad (32) is provided in at least one of the longitudinal slidable bearing faces or surfaces.

12. An assembly as claimed in any one of the preceding claims in which at least one of the wedge faces (20, 21) comprises a rib (53) or other protrusion which permits the wedge component (18) to adapt relative to the rack bar under loading.

13. An assembly as claimed in claim 12 in which the rib (53) or protrusion is resiliently displaceable or flexible.

14. A vehicle steering system which includes an assembly as claimed in any one of the preceding claims.

**Patentansprüche**

1. Getriebeaufbau mit Zahnstange und Ritzel, enthaltend eine Zahnstange (10) mit einer in Längsrichtung verlaufenden Achse, einer Zahnreihe (11) und einer ersten und einer zweiten Auflagefläche (12, 13), welche in Richtung einer fiktiven Linie zusammenlaufen, die parallel zu der Längsachse verläuft und sich abgewandt von der Zahnreihe (11) befindet; ein in die Zahnreihe (11) eingreifendes Ritzel (6); eine in einem Gehäuse (1) befindliche Hohlkehle (14), durch welche die Zahnstange in Längsrichtung verschiebbar ist, wobei die Hohlkehle eine erste und eine zweite Seitenwand (15, 16) aufweist, welche zusammenlaufen und zwischen die Zahnstange axial gleiten kann, so daß die zusammenlaufenden Seitenwände (15, 16) jeweils in gleichem Sinn den beiden Auflagflächen (12, 13) der Zahnstange gegenüberliegenden und sich diesen nähern, wobei die erste Auflagefläche (12) in gleitender Anlage zu der ersten Seitenswand (15) steht und wobei ein Keilelement (18) zwischen der zweiten Auflagefläche (13) und der zweiten Seitenwand (16) angeordnet ist, welches Keilelement (18) relativ zu dem Gehäuse federnd vorgespannt ist, dadurch gekennzeichnet, daß sowohl die erste als auch die zweite der Auflageflächen (12, 13) eben ist und die erste Auflagefläche (12) in einer Ebene liegt, welche einen spitzen Winkel mit der Ebene der Zahnreihe (11) einnimmt, und daß das Keilelement (18) und der Seite der Zahnstange (10, 40) und gegenüber derjenigen der ersten Auflagefläche (12) angeordnet ist und unter Keilwirkung zwischen der zweiten Auflagefläche (13) und der zweiten Seitenwand (16) vorgespannt (24) ist, wobei das Keilelement (18) durch die Vorspannung so in eine Richtung weg von der Ebene der Zahnreihe (11) getrieben wird, daß die Zahnstange (10) durch die auf sie ausgeübten Kraftkomponenten über ihre zusammenlaufenden ebenen Auflageflächen (12, 13) in Richtung, ihrer Zahnreihe (11) vorgespannt ist, um in das Ritzel (6) einzugreifen.

2. Aufbau nach Anspruch 1, bei welchem die Zahnstange (10) im wesentlichen dreieckig im Querschnitt ist und drei in Längsrichtung verlaufende Flächen aufweist, während die Zahnreihe (11) auf einer der drei Flächen ausgebildet ist und die beiden Auflageflächen (12, 13) in den anderen Flächen aufgenommen sind.

3. Aufbau nach Anspruch 1 oder 2, worin wenigstens eine der Auflageflächen (45) für die Zahnstange mit einem Paßstück (43, 44) an einem Zahnelement (40) mit der Zahnreihe (11) versehen ist.

4. Aufbau nach einem der vorangegangenen Ansprüche, worin das Keilelement (18) federnd durch eine Druckfeder (24) vorgespannt ist, welche in einer Ausnehmung (23) des Keilelements sitzt und gegen eine in dem Gehäuse (1) befindliche Schulter wirkt.

5. Aufbau nach einem der vorangegangenen Ansprüche, bei welchem die Gehäusewandung zur Verbindung mit der Hohlkehle (14) mit einer Bohrung (30) versehen ist oder war, welche Bohrung (30) im wesentlichen so mit dem Keilelement (18) fluchtet, daß während der Montage des Getriebes eine Stange durch die Bohrung (30) geführt werden kann, um das Keilelement entgegen seiner Vorspannung (24) zu verschieben und dadurch das Anbringen der Zahnstange (10) in dem Gehäuse zu erleichtern.

6. Aufbau nach Anspruch 5, bei welchem die Bohrung (30) mit Gewinde versehen ist und einen Stopfen (31) aufnimmt.

7. Aufbau nach einem der vorangegangenen Ansprüche, bei welchem die Geometrie der mit den Auflageflächen (12, 13) und den Seitenwänden (15, 16) zusammenlaufenden Flächen (20, 21) des Keilelements (18) und/oder die federnde Vorspannung (24) dem Keilelement (18) gestatten, zurückzukehren (also eine Verschiebung entgegen seiner federnden Vorspannung zu zeigen), wenn übermäßige Kräfte dazu bestrebt sind, die Zahnreihe (11) außer Eingriff mit dem Ritzel (6) zu drängen.

8. Aufbau nach Anspruch 7, bei welchem das Gehäuse (1) mit einem Anschlag (36) versehen ist, welcher das Maß der möglichen zurückkehrenden Verschiebung des Keilelements (18) begrenzt.

9. Aufbau nach Anspruch 8, worin der Anschlag (36) einen in dem Gehäuse befestigten Stab (34) umfaßt, wobei ein Ende des Stabs des Keilelement (18) zur Anlage an diesem bei einer Bewegung des Keilelements gegen federnde Vorspannung (24) überlagert.

10. Aufbau nach Anspruch 8 oder 9, bei welchem der Anschlag (36) einstellbar ist.

11. Aufbau nach einem der vorangegangenen Ansprüche, bei welchem ein Lagersegment (32) in wenigstens einer der in Längsrichtung aneinander gleitfähigen Auflageflächen oder -oberflächen vorgesehen ist.

12. Aufbau nach einem der vorangegangenen Ansprüche, bei welchem wenigstens eine der Keilflächen (20, 21) eine Rippe (53) oder einen anderen Vorsprung aufweist, welcher dem Keilelement (18) erlaubt, sich unter Last bezüglich der Zahnstange anzupassen.

13. Aufbau nach Anspruch 12, bei welchem die Rippe (53) oder der Vorsprung federnd verschiebbar oder flexibel ist.

14. Fahrzeug-Lenksystem, welches eine Aufbau nach einem der vorangegangenen Ansprüche enthält.

**Revendications**

1. Ensemble à crémaillère et pignon comportant une barre (10) à crémaillère ayant un axe s'étendant longitudinalement, une crémaillère (11) et des première et seconde surfaces d'appui (12, 13) qui convergent vers une ligne fictive qui s'étend parallélement à l'axe longitudinal et qui est un emplacement opposé à celui de la crémaillère (11); un pignon (6) engrenant avec la crémaillère (11); un rainure (14) située dans un boîtier (1) et dans laquelle la barre à crémaillère peut être déplacée longitudinalement, la rainure ayant des première et seconde parois latérales convergentes (15, 16) entre lesquelles la barre à crémaillère peut coulisser axialement afin que les parois latérales convergentes (15, 16) soient respectivement opposées aux deux surfaces d'appui (12, 13) de la barre à crémaillère et convergent dans un sens similaire à celui des deux surfaces d'appui (12, 13) de la barre à crémaillère, la première surface d'appui (12) étant en butée de glissement avec la première paroi latérale (15), une pièce en coin (18) étant placée entre la seconde surface d'appui (13) et la seconde paroi latérale (16), ladite pièce en coin (18) étant rappelée élastiquement par rapport au boîtier, caractérisé en ce que chacune des première et seconde surfaces d'appui (12, 13) est lisse et la première surface d'appui (12) s'étend dans un plan qui sous-tend un angle aigu avec le plan de la crémaillère (11), et en ce que la pièce en coin (18) est placée sur le côté de la barre à crémaillère (10, 40) opposé à celui de la première surface d'appui (12) et est rappelée (24) par l'action de coincement entre la seconde surface d'appui (13) et la seconde paroi latérale (16), ladite pièce en coin (18) étant sollicitée par le rappel dans un sens s'éloignant du plan de la crémaillère (11) et de façon que la barre à crémaillère (10) soit rappelée par les composantes de force exercées sur elle par l'intermédiaire de ses surfaces d'appui lisses convergentes (12, 13) dans un sens faisant engrener sa crémaillère (11) avec le pignon (6).

2. Ensemble selon la revendication 1, dans lequel la barre à crémaillère (10) est d'une section transversale sensiblement triangulaire de façon à présenter trois faces s'étendant longitudinalement, la crémaillère (11) étant formée sur l'une de ces faces et les deux surfaces d'appui (12, 13) étant placées dans les autres faces.

3. Ensemble selon la revendication 1 ou la revendication 2, dans lequel au moins l'une des surfaces d'appui (45) pour la barre à crémaillère est constituée par un adaptateur (43, 44) sur un élément à crémaillère (40) comportant la crémaillère (11).

4. Ensemble selon l'une quelconque des revendications précédentes, dans lequel la pièce en coin (18) est rappelée élastiquement par un ressort (24) de compression logé dans un évidement (23) de la pièce en coin et réagissant sur un épaulement (25) prévu dans le boîtier (1).

5. Ensemble selon l'une quelconque des revendications précédentes, dans lequel un trou (30) est ou a été prévu dans la paroi du boîtier pour communiquer avec la rainure (14), ledit trou (30) étant sensiblement en alignement avec la pièce en coin (18) afin que, durant l'assemblage du mécanisme, une tige puisse être passée dans le trou (30) pour déplacer la pièce en coin contre son rappel (24) et faciliter ainsi l'installation de la barre à crémaillère dans le boîtier (1).

6. Ensemble selon la revendication 5, dans lequel le trou (30) est taraudé et reçoit un bouchon (31).

7. Ensemble selon l'une quelconque des revendications précédentes, dans lequel la géometrie des surfaces d'appui (12, 13), des parois latérales (15, 16), des faces convergentes (20, 21) de la pièce en coin (18) et/ou du rappel élastique (24) permet à la pièce en coin (18) d'être réversible (c'est-à-dire d'effectuer un déplacement contre son rappel élastique) en réponse à des forces excessives tendant à faire sortir la crémaillère (11) de sa prise engenrée avec le pignon (6).

8. Ensemble selon la revendication 7, dans lequel une butée (36) est prévue dans le boîtier (1), laquelle limite l'étendue du déplacement réversible admissible pour la pièce en coin (18).

9. Ensemble selon la revendication 8, dans lequel une butée (36) comprend une tige (34) fixée dans le boîtier (1), une extrémité de la tige étant placée au-dessus de la pièce en coin (18) pour buter contre elle durant le mouvement de la pièce en coin contre son rappel élastique (24).

10. Ensemble selon la revendication 8 ou la revendication 9, dans lequel la butée (36) est réglable.

11. Ensemble selon l'une quelconque des revendications précédentes, dans lequel un patin d'appui (32) est prévu dans au moins l'une des faces ou surfaces d'appui pouvant coulisser longitudinalement.

12. Ensemble selon l'une quelconque des revendications précédentes, dans lequel au moins l'une des faces (20, 21) du coin comporte une nervure (53) ou autre saillie qui permet à la pièce en coin (18) de s'adapter à la barre à crémaillère en charge.

13. Ensemble selon la revendication 12, dans

EP 0 238 214 B1

lequel la nervure (53) ou saillie peut être déplacée élastiquement ou est flexible.

14. Système de direction de véhicule qui comprend un ensemble selon l'une quelconque des revendications précédentes.

FIG.1.

EP 0 238 214 B1

FIG.2.

FIG.3.

FIG.5.

FIG.4.

FIG.6.

4